# FASCICULE DE BREVET EUROPEEN

(11) **EP 0 904 498 B1**
(45) Date de publication et mention de la délivrance du brevet: **31.07.2002**
(21) Numéro de dépôt: 97925099.0
(22) Date de dépôt: 16.05.1997
(51) Int. Cl.: F16D 41/12

(54) **DISPOSITIF D'IRREVERSIBILITE A ROUES A ROCHET ET DISQUE DE FROTTEMENT POUR SYSTEME D'ENTRAINEMENT DU TYPE VIS-ECROU**
FREILAUFKUPPLUNG UND REIBUNGSSCHEIBE FÜR EINEM SCHRAUBMECHANISMUS
NON-REVERSING DEVICE WITH RATCHET WHEELS AND FRICTION DISK FOR SCREW-NUT TYPE DRIVING SYSTEM

(30) Priorité: 12.06.1996 FR 9607296
(43) Date de publication de la demande: 31.03.1999
(73) Titulaire: RATIER-FIGEAC, F-46100 Figeac (FR)
(72) Inventeur: BOUSQUET, Jacques, F-46100 Figeac (FR)
(74) Mandataire: Bertrand, Didier
(86) Numéro de dépôt international: FR9700875
(87) Numéro de publication internationale: WO9747895

(56) Documents cités:
- FR-A- 2 652 393
- US-A- 4 368 652
- US-A- 4 569 241
- US-A- 5 088 581

## Description

L'invention concerne un dispositif d'irréversibilité lié à un système d'entraînement du type vis-écrou (notamment vis à billes) de façon à le rendre irréversible sous charge, afin d'assurer la sécurité de l'ensemble, à savoir le maintien en position en cas de rupture ou défaillance (ou glissement ou dévirement) dans le dispositif de commande (motoréducteur d'entraînement et frein d'arrêt).

Le document US-A-4 569 241 fait connaître un système vis à billes/écrou, dans lequel la vis et l'écrou d'une part, leurs éléments d'interface d'autre part, sont fabriqués séparément, puis assemblés ensuite, par exemple par soudure laser ou par soudure à faisceau d'électrons. Ce document ne montre toutefois pas de dispositif d'irréversibilité.

Le document US-A-5 088 581 concerne une roue libre à cliquets multiples constitués de lames flexibles, réalisée en plastique et fonctionnant jusqu'à 85°C, mais il ne montre pas de disque de frottement.

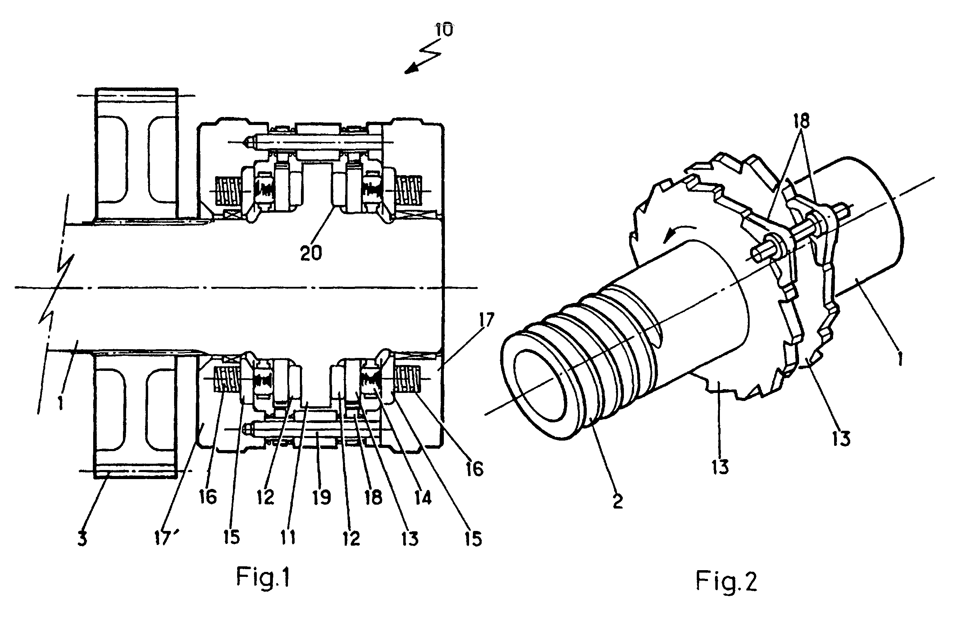

On connaît, notamment dans les applications à l'aéronautique, un dispositif d'irréversibilité pour système d'entraînement du type vis-écrou, comprenant en bout de l'arbre formant la vis, une collerette contre au moins une face de laquelle peuvent s'appuyer, axialement dans cet ordre, un disque annulaire de frottement, une roue libre à rochet bloquée dans un sens de rotation par un cliquet, au moins un organe roulant de butée axiale, et au moins un ressort de précharge s'appuyant sur le bâti, carter ou analogue dans lequel est monté l'arbre. En pratique, il est prévu un dispositif symétrique de part et d'autre de la collerette, et les deux roues à rochet ainsi que les cliquets sont montés en opposition, c'est-à-dire que le sens de rotation libre de l'une correspond au sens de blocage de l'autre. Ce dispositif connu dont on rappellera le fonctionnement plus loin en référence aux figures 1 et 2 annexées, assure bien l'irréversibilité requise.

L'invention a pour but de perfectionner le dispositif connu et ce but est atteint en ce que le disque de frottement est immobilisé en rotation par rapport à la collerette de façon à supprimer tout frottement entre la collerette centrale et le disque de frottement. Le frottement intervient alors obligatoirement entre le disque et la roue à rochet, supprimant ainsi toute usure de la collerette centrale. Les seules pièces d'usure restent les disques de frottement et les roues à rochet, le frottement et l'usure de chaque disque étant localisés sur une seule face, celle qui est en contact avec la roue à rochet adjacente.

Avantageusement, le disque annulaire est immobilisé en rotation par une partie autre que son pourtour radialement intérieur. Le centrage du disque de frottement de cette manière permet d'optimiser le rayon de raccordement arbre-collerette centrale et, donc, de minimiser le coefficient de surcontrainte en pied de collerette. Autrement dit, le rayon de raccordement de la collerette n'est pas réduit par le centrage du disque de frottement.

Il est également avantageux de prévoir un témoin d'usure associé au disque et en retrait par rapport à la face dudit disque initialement en contact avec la roue à rochet, ce qui est possible selon l'invention puisque seule cette face est soumise à usure.

Le disque peut être centré et maintenu sur la collerette au moyen d'une bague extérieure. Celle-ci est bloquée en rotation sur le disque par des reliefs associés coopérant par complémentarité directe (par exemple par dents ou cannelures complémentaires) ou par complémentarité indirecte (par exemple par évidements en regard et pions interposés).

La bague peut être sertie sur la collerette par une ou plusieurs pattes de sertissage, ou un bord de sertissage.

La bague peut aussi être fixée par des pions sur la collerette, ces mêmes pions pouvant servir au blocage de la bague sur le disque.

Le disque peut encore être maintenu et centré directement sur la collerette par des rivets.

D'autres caractéristiques et avantages de l'invention ressortiront de la description suivante, se référant aux dessins annexés sur lesquels :
- la figure 1 montre en coupe longitudinale un dispositif d'irréversibilité de l'art antérieur pour ensemble vis-écrou,
- la figure 2 montre en perspective le détail des deux roues à rochet et des cliquets du dispositif de la figure 1,
- la figure 3 montre en demi-coupe longitudinale analogue à la figure 1 un premier mode de réalisation du dispositif d'irréversibilité conforme à l'invention,
- les figures 4 et 5 montrent en vue de bout respectivement un disque de frottement et une bague de maintien utilisés dans ce premier mode de réalisation,
- la figure 6 montre, en demi-coupe longitudinale, un second mode de réalisation du dispositif d'irréversibilité conforme à l'invention,
- les figures 7 et 8 montrent en vue de bout un disque de frottement et une bague de maintien utilisés dans ce deuxième mode de réalisation,
- la figure 9 montre, en demi-coupe longitudinale, un troisième mode de réalisation du dispositif d'irréversibilité conforme à l'invention,
- la figure 10 montre en vue de bout un disque de frottement utilisé dans ce troisième mode de réalisation.

On se référera aux figures 1 et 2 pour rappeler la structure générale et le fonctionnement d'un dispositif d'irréversibilité classique de l'art antérieur.

Le dispositif d'irréversibilité 10 est monté en bout d'un arbre 1 dont la partie 2, tronquée et donc non représentée sur la gauche de la figure 1, est filetée et coopère, par exemple par l'intermédiaire de billes, avec un écrou non représenté. Un pignon de commande 3, entraîné par un motoréducteur non représenté, est claveté ou solidarisé d'une autre manière sur l'arbre 1 pour transmettre sa rotation à l'arbre 1 et à la vis 2, et entraîner en translation l'écrou non représenté auquel est lié cinématiquement l'organe à commander.

Le dispositif 10 est monté symétriquement autour d'une collerette 11 centrale prévue sur l'arbre 1. Il comprend à partir de chaque face de la collerette 11 un disque de frottement 12, une roue à rochet 13, des organes roulants 14 de butée axiale tels que des rouleaux ou billes, et une plaque de butée 15, laquelle est mise en pression par des ressorts de précharge 16 prenant appui sur un couvercle 17 de palier dans lequel tourillonne l'arbre 1 et un carter 17'. Des cliquets 18 sont associés aux roues 13 pour en bloquer la rotation dans un sens et l'autoriser dans l'autre. Les cliquets 18 sont montés sur des axes 19 logés entre le couvercle 17 et le carter 17'.

Les roues à rochets 13 sont calées sur l'arbre 1 et montées, ainsi que les cliquets associés, en opposition comme le montre la figure 2.

Le fonctionnement classique de ce dispositif d'irréversibilité est rappelé ci-après.

On distingue les notions de charges :
- "aidantes" ou "résistantes" qui sont liées au sens dans lequel on veut entraîner la vis en rotation, et qui sont en relation avec le fonctionnement dynamique du système,
- en "traction" ou en "compression", qui mettent en contact l'une ou l'autre face de la collerette avec l'un ou l'autre disque de frottement qui est en vis-à-vis.

Les roues à rochet et les butées à rouleaux :
- n'ont pas pour fonction principale d'assurer l'irréversibilité du système (qui pourrait être assurée en mettant directement en contact le disque de frottement avec la plaque de butée,
- mais de minimiser le couple d'entraînement (rôle des rouleaux) tout en maintenant l'irréversibilité (rôle des rochets et des cliquets).
   Le sens des rochets et cliquets est lié au sens d'inclinaison du filet de la vis (pas à droite ou pas a gauche).

Lorsqu'une charge est appliquée à l'écrou (traction ou compression), la composante axiale de cette charge se transmet par la vis 2 sur l'arbre 1 et pousse la collerette 11 contre l'un des disques de frottement 12 et la roue adjacente 13.

Le couple induit par cette charge sur la vis 2 se transmet par friction de la collerette 11 au disque 12 (celui qui est chargé par la composante axiale) et du disque 12 à la roue à rochet 13.

Le sens des cliquets a été choisi de façon à s'opposer au sens du couple induit qui est transmis de la roue à rochets 13 aux cliquets 18 et au boîtier 17, assurant ainsi l'irréversibilité.

Quand on veut entraîner la vis 2 en rotation :
- si la charge est résistante (couple induit s'opposant au sens d'entraînement voulu), la roue à rochets tourne librement par rapport aux cliquets, et il n'y a pas de perte par frottement du disque pour entraîner la vis. Le couple appliqué au pignon 3 doit être supérieur ou égal au couple induit,
- si la charge est aidante (couple induit dans le sens de l'entraînement voulu), la roue à rochets est bloquée par les cliquets. Le couple appliqué au pignon 3 doit être supérieur ou égal à la différence entre le couple de frottement et le couple induit.

Dans ce qui précède, les couples sont considérés en valeur absolue. D'autre part, le couple de frottement doit toujours être supérieur au couple induit. Il en est ainsi par le choix du rayon moyen du disque, des matériaux en contact et des conditions de lubrification.

Cette structure et ce fonctionnement globalement connus sont intégralement repris dans la présente invention et on n'y reviendra pas.

Dans les dispositifs connus, les disques ou plus exactement anneaux de frottement 12 sont centrés sur l'arbre 1 grâce à un épaulement 20 qu'il faut prévoir près du pied de la collerette 11, de part et d'autre. Les faibles rayons de raccordement qu'impose cet épaulement entraînent une fragilisation de cette région de la collerette. D'autre part, les disques 12 ne sont pas bloqués en rotation, si bien que le frottement s'exerce indifféremment à la fois entre la face de la collerette en regard et la roue à rochet 13, ce qui oblige à traiter en dureté superficielle ces deux éléments. Ceci n'est pas un inconvénient majeur pour la roue à rochet 13 dont la face sur laquelle portent les rouleaux 14 doit de toute façon être traitée. En revanche, c'est une opération supplémentaire pour la collerette dont on souhaite pouvoir se passer.

C'est pourquoi l'invention propose de supprimer tout frottement entre la collerette et les disques de frottement grâce à l'immobilisation, de préférence par l'extérieur, desdits disques par rapport à la collerette.

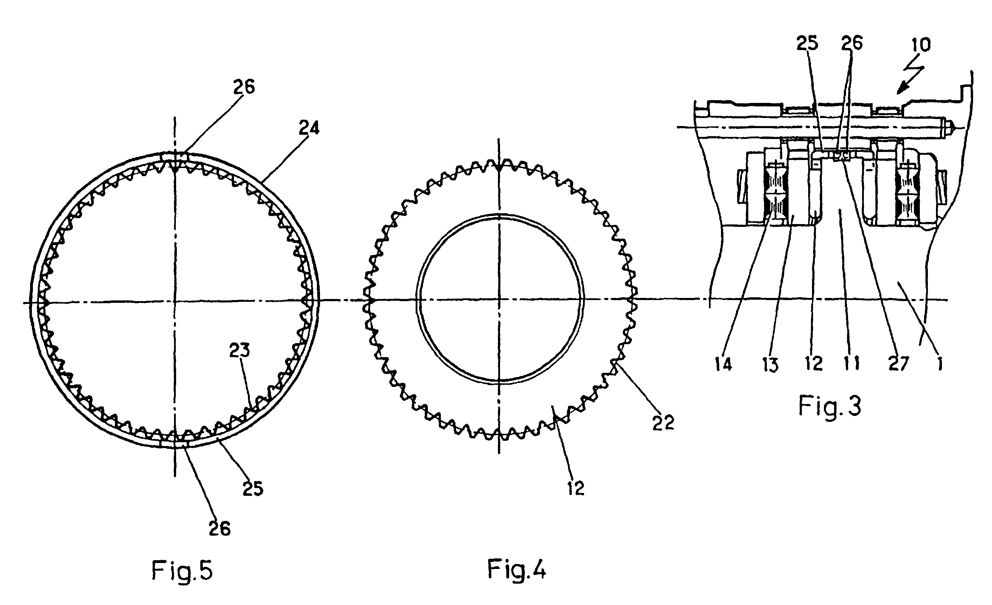

Selon un premier mode de réalisation de l'invention représenté sur les figures 3 à 5, le disque de frottement 12 est réalisé sous forme d'un anneau dont le bord radial extérieur 22 est cannelé ou denté ou comporte d'autres types de reliefs destinés à coopérer avec des reliefs complémentaires (tels que cannelures ou dents) formés sur le bord intérieur 23 d'une bague 24 de maintien destinée à assurer le centrage et l'entraînement du disque 12 par rapport à la collerette 11. A cet effet, la bague 24 comporte un rebord 25 qui vient s'appuyer sur le bord du pourtour cylindrique de la collerette 11 et peut être immobilisé grâce à deux pattes de sertissage 26 prises dans un évidement 27 de la collerette ; un faible couple suffit à retenir la bague, puisqu'il ne s'agit que de favoriser systématiquement le frottement sur la face du disque 12 en contact avec la roue à rochet 13.

Le disque 12 est ainsi centré de l'extérieur, ce qui donne la possibilité de laisser au pied de la collerette 11 un rayon de raccordement permettant de ne pas induire de fragilité, et de donner au diamètre intérieur du bord chanfreiné du disque annulaire 12 une dimension supérieure à celle du diamètre de l'arbre 1 au voisinage de la collerette 11.

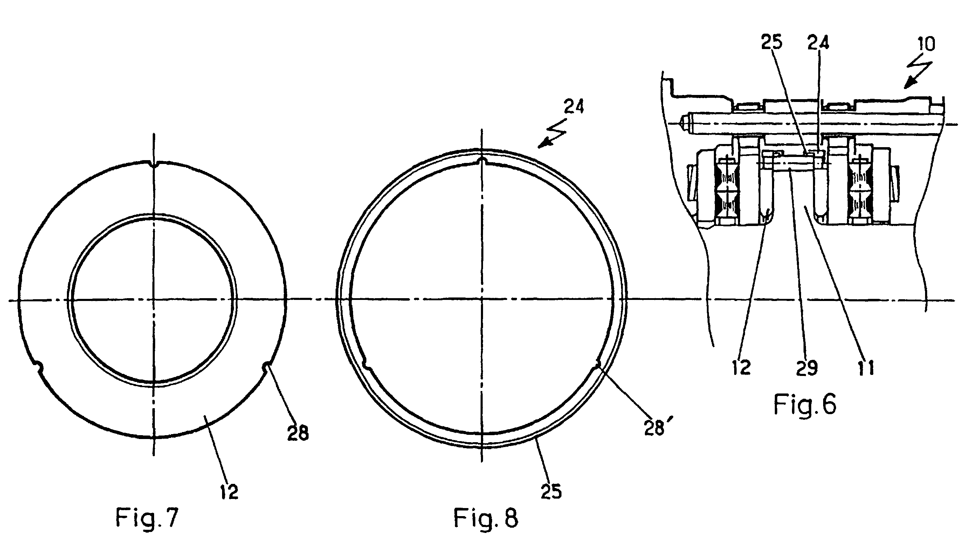

Le second mode de réalisation de l'invention représenté sur les figures 6 à 8, est assez proche du précédent et utilise aussi une bague de centrage et de maintien 24 du disque 12, qui coopère avec celui-ci par l'intermédiaire d'évidements conjugués 28, 28' qui permettent le passage de pions d'immobilisation 29 reçus et donc bloqués dans des évidements correspondants du pourtour de la collerette 11.

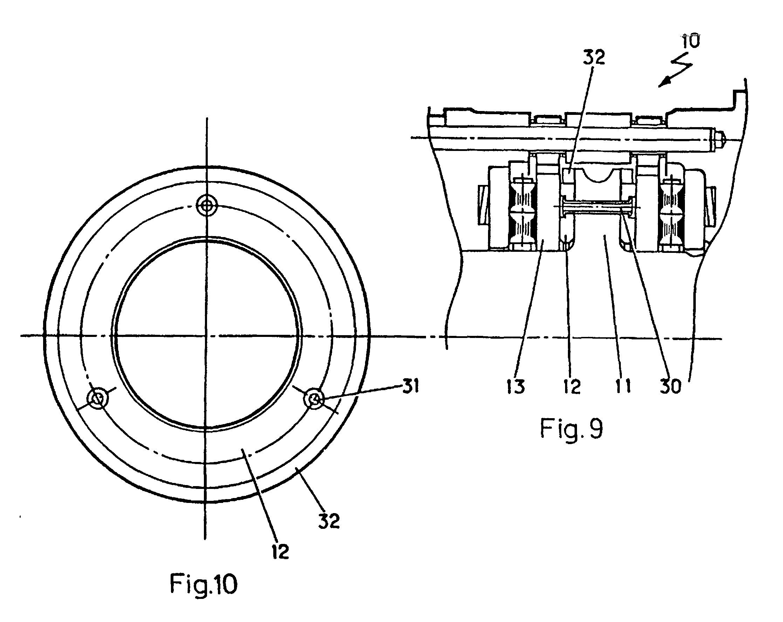

Le troisième mode de réalisation de l'invention représenté sur les figures 9 et 10, n'utilise pas de bague pour maintenir et centrer le disque 12 : cette fonction est directement remplie par des rivets 30 (par exemple trois) passant dans des trous 31 équirépartis sur une circonférence intermédiaire du disque 12. Le périmètre du disque, resté libre, peut recevoir un anneau 32 témoin d'usure, dont l'épaisseur, mesurée à partir du plan de la face du disque 12 en contact avec la collerette, est inférieure à celle du disque lui-même. Quand le disque atteint sa cote minimale, l'anneau 32 frotte sur la roue à rochet 13 et le couple de friction augmente considérablement grâce au choix de matériaux et à la modification du rayon moyen de fonctionnement. L'augmentation du couple dans le sens de la charge aidante peut aller jusqu'au blocage du système.

On notera que dans les deux premiers modes de réalisation, ce rôle de témoin d'usure est joué par la bague de maintien 24 qui, comme le montrent les figures 3 et 6, est également en retrait par rapport au plan de la face, tournée vers la roue à rochet du disque 12 non usé.

## Revendications

1. Dispositif d'irréversibilité pour système d'entraînement du type vis-écrou, comprenant sur l'arbre (1) formant la vis (2) une collerette (11) contre au moins une face de laquelle peuvent s'appuyer, axialement dans cet ordre, un disque annulaire de frottement (12), une roue libre à rochet (13) bloquée dans un sens de rotation par un cliquet (18), au moins un organe roulant de butée axiale (14), et au moins un ressort de précharge (16) s'appuyant sur un boîtier (17), **caractérisé en ce que** le disque de frottement (12) est immobilisé en rotation par rapport à la collerette (11).

2. Dispositif selon la revendication 1, **caractérisé en ce que** le disque annulaire (12) est immobilisé en rotation par rapport à la collerette (11) par une partie autre que son pourtour radialement intérieur.

3. Dispositif selon l'une quelconque des revendications précédentes, **caractérisé par** un témoin d'usure (24, 32) associé au disque (12) et en retrait par rapport à la face dudit disque (12) initialement en contact avec la roue à rochet (13).

4. Dispositif selon l'une quelconque des revendications précédentes, **caractérisé en ce que** le disque (12) est centré et maintenu sur la collerette (11) au moyen d'une bague extérieure (24).

5. Dispositif selon la revendication 4, **caractérisé en ce que** la bague (24) et bloquée en rotation sur le disque (12) par des reliefs associés (22, 23, 24) coopérant par complémentarité directe (22, 23) ou par complémentarité indirecte (24).

6. Dispositif selon l'une quelconque des revendications 4 ou 5, **caractérisé en ce que** la bague (24) est sertie sur la collerette (11).

7. Dispositif selon l'une quelconque des revendications 4 ou 5, **caractérisé en ce que** la bague (24) est fixée par des pions (29) sur la collerette (11).

8. Dispositif selon l'une quelconque des revendications 1 à 3, **caractérisé en ce que** le disque (12) est maintenu et centré sur la collerette (11) par des rivets (30).

9. Dispositif selon l'une quelconque des revendications précédentes, **caractérisé en ce que** le frottement et l'usure du disque (12) sont localisés sur une seule face, celle qui est par contact avec la roue à rochet.

10. Dispositif selon l'une quelconque des revendications précédentes, **caractérisé en ce que** le rayon de raccordement de la collerette (11) n'est pas réduit par le centrage du disque de frottement (12).

## Patentansprüche

1. Irreversibilitätsvorrichtung für ein Antriebssystem des Typs Schraube-Mutter, welche auf der Achse (1), die die Schraube (2) bildet, einen Kragen (11) aufweist, wobei sich auf mindestens eine Fläche desselben axial in dieser Reihenfolge eine ringförmige Reibungsscheibe (12), ein Sperrklinken-Freilaufrad (13), das in einer Drehrichtung durch eine Sperrklinke (18) blockiert wird, mindestens eine Rolleinrichtung mit Axiallager (14) und mindestens eine Vorbelastungsfeder (16), die sich auf ein Gehäuse (17) stützt, stützen können, **dadurch gekennzeichnet, daß** die Reibungsscheibe (12) an der Rotation bezüglich des Kragens (11) gehemmt wird.

2. Vorrichtung nach Anspruch 1, **dadurch gekennzeichnet, daß** die ringförmige Scheibe (12) an der Rotation bezüglich des Kragens (11) durch einen anderen Teil als ihren radial inneren Umfang gehemmt wird.

3. Vorrichtung nach einem der vorangehenden Ansprüche, **gekennzeichnet durch** eine Verschleißanzeige (24, 32), die mit der Scheibe (12) verbunden ist und bezüglich der Fläche der Scheibe (12), die anfänglich mit dem Sperrklinkenrad (13) in Kontakt steht, vertieft ist.

4. Vorrichtung nach einem der vorangehenden Ansprüche, **dadurch gekennzeichnet, daß** die Scheibe (12) an dem Kragen (11) mittels eines äußeren Rings (24) zentriert und gehalten wird.

5. Vorrichtung nach Anspruch 4, **dadurch gekennzeichnet, daß** der Ring (24) in der Rotation an der Scheibe (12) durch zugehörige Vorsprünge (22, 23, 24) blockiert wird, welche durch direkte Komplementarität (22, 23) oder durch indirekte Komplementarität (24) zusammenwirken.

6. Vorrichtung nach einem der Ansprüche 4 oder 5, **dadurch gekennzeichnet, daß** der Ring (24) den Kragen (11) einfaßt.

7. Vorrichtung nach einem der Ansprüche 4 oder 5, **dadurch gekennzeichnet, daß** der Ring (24) durch Metallstücke (29) an dem Kragen (11) befestigt ist.

8. Vorrichtung nach einem der Ansprüche 1 bis 3, **dadurch gekennzeichnet, daß** die Scheibe (12) an dem Kragen (11) durch Niete (30) gehalten und zentriert wird.

9. Vorrichtung nach einem der vorangehenden Ansprüche, **dadurch gekennzeichnet, daß** die Reibung und der Verschleiß der Scheibe (12) auf eine einzige Fläche beschränkt sind, und zwar jene, die mit dem Sperrklinkenrad in Kontakt steht.

10. Vorrichtung nach einem der vorangehenden Ansprüche, **dadurch gekennzeichnet, daß** der Kupplungsradius des Kragens (11) durch die Zentrierung der Reibungsscheibe (12) nicht verringert wird.

## Claims

1. Non-reversing device for a drive system of the screw-nut type, comprising, on the shaft (1) forming' the screw (2), a flange (11) against at least one face of which an annular friction disc (12), a ratchet free wheel (13) blocked in one direction of rotation by a pawl (18), at least one axial-stop rolling member (14) and at least one preload spring (16) resting against a casing (17), can rest, axially in this order, **characterized in that** the friction disc (12) is prevented from rotating with respect to the flange (11).

2. Device according to Claim 1, **characterized in that** the annular disc (12) is prevented from rotating with respect to the flange (11) by a part other than its radially internal periphery.

3. Device according to either one of the preceding claims, **characterized by** a wear indicator (24, 32) associated with the disc (12) and set back from that face of the said disc (12) that is initially in contact with the ratchet wheel (13).

4. Device according to any one of the preceding claims, **characterized in that** the disc (12) is centered and held on the flange (11) by means of an external ring (24).

5. Device according to Claim 4, **characterized in that** the ring (24) is blocked from rotating on the disc (12) by associated reliefs (22, 23, 24) which interact by being directly complementary (22, 23) or by being indirectly complementary (24).

6. Device according to either one of Claims 4 or 5, **characterized in that** the ring (24) is crimped to the flange (11).

7. Device according to either one of Claims 4 or 5, **characterized in that** the ring (24) is fixed to the flange (11) by pegs (29).

8. Device according to any one of Claims 1 to 3, **characterized in that** the disc (12) is held and centered on the flange (11) by rivets (30).

9. Device according to any one of the preceding claims, **characterized in that** the friction and wear of the disc (12) are localized on just one face, the one which is in contact with the ratchet wheel.

10. Device according to any one of the preceding claims, **characterized in that** the fillet radius of the flange (11) is not reduced by the centering of the friction disc (12).
